# FASCICULE DE BREVET EUROPEEN

(11) **EP 3 422 554 B1**
(45) Date de publication et mention de la délivrance du brevet: **16.12.2020**
(21) Numéro de dépôt: 18178859.7
(22) Date de dépôt: 20.06.2018
(51) Int. Cl.: H02M 7/5388, H02M 7/757, H02M 7/797

(54) **CONVERTISSEUR AC/DC RÉVERSIBLE À THYRISTORS**
REVERSIBLER AC/DC-WANDLER MIT THYRISTOREN
REVERSIBLE AC/DC CONVERTER WITH THYRISTORS

(30) Priorité: 30.06.2017 FR 1756180
(43) Date de publication de la demande: 02.01.2019
(73) Titulaire: STMicroelectronics (Tours) SAS, 37100 Tours (FR)
(72) Inventeur: BENABDELAZIZ, Ghafour, 37700 Tours (FR); REYMOND, Cédric, 37100 Tours (FR); JOUVE, David, 37360 Saint-Antoine-du-Rocher (FR)
(74) Mandataire: Cabinet Beaumont

(56) Documents cités:
- US-A1- 2002 176 261
- US-A1- 2015 131 343
- BAHAROM RAHIMI ET AL: "A high power factor bidirectional battery charger using single-phase matrix converter", 2015 IEEE 10TH CONFERENCE ON INDUSTRIAL ELECTRONICS AND APPLICATIONS (ICIEA), IEEE, 15 juin 2015 (2015-06-15), pages 1397-1402, XP032816039, DOI: 10.1109/ICIEA.2015.7334327 [extrait le 2015-11-20]

## Description

### Domaine

La présente demande concerne de façon générale les circuits électroniques et, plus particulièrement, les convertisseurs à découpage dits à sortie totem pole, ou cascode à point milieu.

### Exposé de l'art antérieur

Les convertisseurs à découpage sont utilisés dans de nombreuses applications et on connait de nombreux types de convertisseurs.

Parmi les convertisseurs alternatif-continu, on connait de nombreuses architectures à pont de redressement et d'autres architectures sans pont, basées sur la commutation de deux transistors (généralement MOS) montés en cascode à point milieu (totem pôle).

Ces convertisseurs sont généralement utilisés pour leur efficacité à corriger le facteur de puissance (Power Factor Corrector - PFC).

Exemples de l'art antérieur sont les documents US2015/131343, US2002/176261 et "A high power factor bidirectional battery charger using single-phase matrix converter", Baharom Rahimi et al.

### Résumé

Il existe un besoin d'améliorer les convertisseurs totem pole.

L'invention est définie par les revendications indépendantes.

Un mode de réalisation propose une architecture de convertisseur totem pole réversible.

Un mode de réalisation propose une solution compatible avec une limitation du courant d'appel.

Ainsi, un mode de réalisation prévoit un convertisseur alternatif-continu réversible, comportant :
un premier transistor à effet de champ et un deuxième transistor à effet de champ en série entre une première borne et une deuxième borne destinées à une tension continue ;
un élément inductif reliant un premier point milieu de l'association en série des deux transistors à une première borne destinée à une tension alternative ;
un premier thyristor et un deuxième thyristor en série entre les bornes de tension continue, un deuxième point milieu de l'association en série du premier thyristor et du deuxième thyristor étant relié à une deuxième borne destinée à la tension alternative, une anode du premier thyristor et une cathode du deuxième thyristor étant reliées audit deuxième point milieu ; et
un troisième thyristor et un quatrième thyristor en série entre les bornes de tension continue, une cathode du troisième thyristor et une anode du premier thyristor étant reliées audit deuxième point milieu.

Selon un mode de réalisation :
une première diode est en parallèle avec le premier transistor (S1), anode côté premier point milieu ; et
une deuxième diode est en parallèle avec le deuxième transistor, cathode côté premier point milieu.

Selon un mode de réalisation, chaque diode est définie par la diode intrinsèque drain-source du transistor concerné.

Selon un mode de réalisation, les thyristors sont à gâchette de cathode.

Selon un mode de réalisation :
le premier thyristor et le quatrième thyristor sont à gâchette de cathode ; et
le deuxième thyristor et le troisième thyristor sont à gâchette d'anode.

Selon un mode de réalisation :
le premier thyristor et le quatrième thyristor sont à gâchette d'anode ; et
le deuxième thyristor et le troisième thyristor sont à gâchette de cathode.

Selon un mode de réalisation, dans un mode de conversion alternatif-continu :
le deuxième thyristor est rendu passant de façon continue pendant des alternances d'un premier signe de la tension alternative ;
le premier thyristor est rendu passant de façon continue pendant des alternances d'un deuxième signe de la tension alternative ;
le deuxième transistor est commandé de façon impulsionnelle pendant les alternances du premier signe ; et
le premier transistor est commandé de façon impulsionnelle pendant les alternances du deuxième signe.

Selon un mode de réalisation, la première diode sert de diode de roue-libre.

Selon un mode de réalisation, dans un mode de conversion continu-alternatif :
le quatrième thyristor est rendu passant de façon continue pendant des alternances d'un premier signe de la tension alternative ;
le troisième thyristor est rendu passant de façon continue pendant des alternances d'un deuxième signe de la tension alternative ;
le premier transistor est commandé de façon impulsionnelle pendant les alternances du premier signe ; et
le deuxième transistor est commandé de façon impulsionnelle pendant les alternances du deuxième signe.

Selon un mode de réalisation, la deuxième diode sert de diode de roue-libre.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma électrique d'un exemple usuel de convertisseur totem pole alternatif-continu ;
la figure 2 représente, de façon schématique et partielle, en partie sous forme de blocs, un mode de réalisation d'un convertisseur totem pole réversible ;
les figures 3A, 3B, 3C, 3D, 3E, 3F, 3G et 3H illustrent, sous forme de chronogrammes, le fonctionnement du convertisseur de la figure 2 en mode de conversion alternatif-continu ;
les figures 4A, 4B, 4C, 4D, 4E, 4F, 4G et 4H illustrent, sous forme de chronogrammes, le fonctionnement du convertisseur de la figure 2 en mode de conversion continu-alternatif ;
la figure 5 représente, de façon schématique et simplifiée, un mode de réalisation d'un circuit de génération de tensions continues de circuits de commande d'un convertisseur totem pole réversible, adapté au mode de réalisation de la figure 2 ;
la figure 6 représente, de façon schématique et partiellement sous forme de blocs, un autre mode de réalisation d'un convertisseur totem pole réversible ;
la figure 7 représente, de façon schématique et partiellement sous forme de blocs, un autre mode de réalisation d'un convertisseur totem pole réversible ;
la figure 8 représente, de façon schématique et partiellement sous forme de blocs, un mode de réalisation d'un circuit de génération de tensions continues de circuits de commande des convertisseurs des figures 6 et 7 ;
la figure 9 représente, de façon schématique et partiellement sous forme de blocs, un autre mode de réalisation d'un convertisseur totem pole réversible ; et
la figure 10 représente, de façon schématique et partiellement sous forme de blocs, un mode de réalisation d'un circuit de génération de tensions continues d'alimentation de circuits de commande du convertisseur de la figure 9.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation qui vont être décrits ont été représentés et seront détaillés. En particulier, l'application finale du convertisseur n'a pas été détaillée, les modes de réalisation décrits étant compatibles avec les applications usuelles des convertisseurs alternatif-continu, continu-alternatif ou réversibles.

Sauf précision contraire, lorsque l'on fait référence à deux éléments connectés entre eux, cela signifie directement connectés sans élément intermédiaire autre que des conducteurs, et lorsque l'on fait référence à deux éléments reliés entre eux, cela signifie que ces deux éléments peuvent être directement reliés (connectés) ou reliés par l'intermédiaire d'un ou plusieurs autres éléments.

Dans la description qui suit, les expressions "approximativement", "sensiblement", et "de l'ordre de" signifient à 10 % près, de préférence à 5 % près.

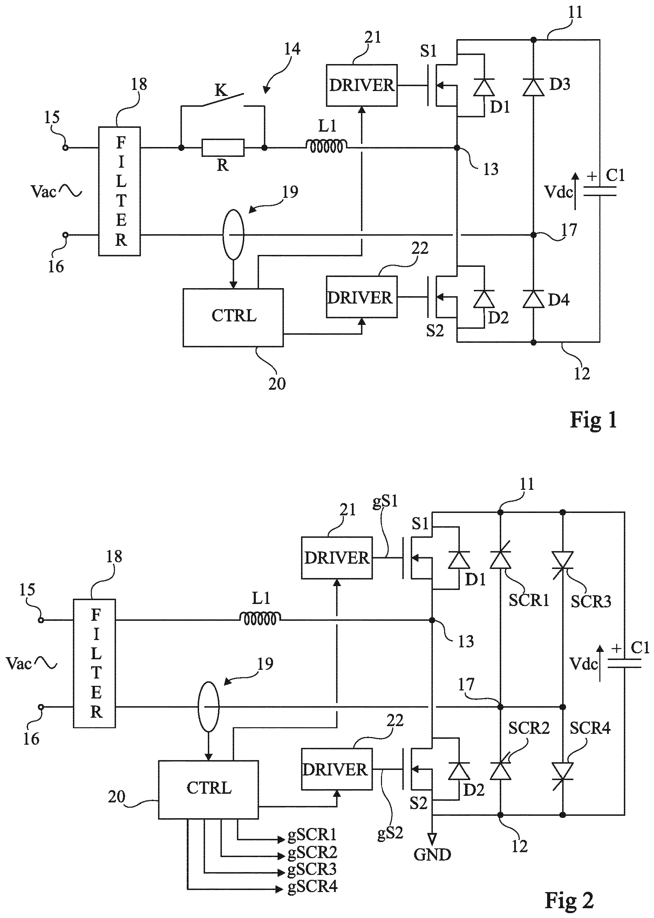

La figure 1 est un schéma électrique d'un exemple usuel de convertisseur totem pole, alternatif-continu.

Un convertisseur totem pole est basé sur l'utilisation de deux transistors MOS (ici à canal N) S1 et S2, connectés en série entre deux bornes 11 et 12 de fourniture d'une tension continue Vdc. Le drain du transistor S1 est côté borne 11 et la source du transistor S2 est côté borne 12. Un élément de stockage C1 (condensateur ou batterie par exemple) de l'énergie continue relie les bornes 11 et 12, la borne 11 étant, arbitrairement, la borne positive de la tension Vdc. Le point milieu 13 entre les deux transistors S1 et S2 est relié, par l'intermédiaire d'un élément inductif L1 en série avec un circuit 14 de limitation du courant d'appel et des pertes en régime établi, à une première borne 15 d'application d'une tension alternative Vac. Le circuit 14 est, par exemple, une résistance R (à coefficient de température positif PTC ou négatif NTC) en parallèle avec un interrupteur K. La résistance R limite le courant d'appel au démarrage et l'interrupteur K court-circuite la résistance en régime établi pour limiter les pertes résistives une fois l'équilibre de tension atteint. Une deuxième borne 16 d'application de la tension alternative Vac est reliée au point milieu 17 d'une association en série de deux diodes D3 et D4 connectées entre les bornes 11 et 12. Les anodes des diodes D3 et D4 sont respectivement côté point 17 et côté borne 12.

En pratique, les bornes 15 et 16 correspondent à des bornes de raccordement au réseau de distribution électrique et un filtre d'entrée 18 (FILTER), ou filtre secteur, est intercalé entre d'une part la borne 15 et le circuit 14 et, d'autre part, la borne 16 et le point 17. Un élément 19 de mesure du courant alternatif est intercalé entre le filtre 18 et le point 17. L'information représentative du courant, mesuré par l'élément 19, est exploitée par un circuit 20 de commande (CTRL) des périodes de conduction des transistors S1 et S2. Le circuit 20 reçoit d'autres informations comme, par exemple, une information représentative de la tension Vdc, une information représentative des besoins en énergie de la charge connectée aux bornes 11 et 12, etc. Le circuit 20 fournit des signaux de commande à des circuits (DRIVER) 21 et 22 de génération de signaux de commande des grilles des transistors respectifs S1 et S2. En figure 1, on a également représenté les diodes intrinsèques source-drain D1 et D2 des transistors S1 et S2. Les transistors S1 et S2 sont commandés en modulation de largeur d'impulsions en fonction des besoins de la charge connectée aux bornes 11 et 12. La fréquence des impulsions est généralement fixe et est nettement supérieure (ratio d'au moins 100, par exemple de quelques kHz à quelques centaines de kHz) à la fréquence de la tension Vac (généralement moins de 100 Hz, typiquement 50 Hz ou 60 Hz pour le réseau de distribution d'électricité).

Le fonctionnement du convertisseur totem pole de la figure 1 est le suivant. Pour simplifier, on ne tient pas compte de la présence du filtre 18 mais celui-ci est bien entendu traversé par le courant depuis les bornes 15 et 16 et vers ces bornes.

Pendant les alternances positives de la tension Vac, le transistor S2 est commandé en modulation de largeur d'impulsions pour être périodiquement fermé (passant) et le transistor S1 reste en permanence ouvert (bloqué). Par ailleurs, la diode source-drain D2 du transistor S2 se trouve polarisée en inverse tandis que la diode source-drain D1 du transistor S1 se trouve polarisée en direct et sert de diode de roue libre. Pendant les impulsions de fermeture du transistor S2, l'inductance L1 accumule de l'énergie. La circulation du courant s'effectue, depuis la borne 15, via l'inductance L1, le transistor S2 et la diode D4 jusqu'à la borne 16. La charge continue connectée aux bornes 11 et 12 est alimentée par l'énergie emmagasinée dans l'élément de stockage d'énergie C1 (condensateur ou batterie). A chaque ouverture du transistor S2, l'énergie emmagasinée dans l'inductance L1 est transférée à la charge continue. La circulation du courant s'effectue alors depuis l'inductance L1, via la diode D1 du transistor S1 jusqu'à la borne positive 11, puis de la borne négative 12, via la diode D4 jusqu'à la borne 16 pour reboucler sur l'inductance L1. Dans certains cas, la diode D1 est une diode en parallèle sur le transistor S1.

Pendant les alternances négatives de la tension Vac, le transistor S1 est commandé en modulation de largeur d'impulsions pour être périodiquement fermé (passant) et le transistor S2 reste en permanence ouvert (bloqué). Par ailleurs, la diode source-drain D1 du transistor S1 se trouve polarisée en inverse tandis que la diode source-drain D2 du transistor S2 se trouve polarisée en direct et sert de diode de roue libre. Pendant les impulsions de fermeture du transistor S1, l'inductance L1 accumule de l'énergie. La circulation du courant s'effectue, depuis la borne 16, via la diode D3, le transistor S1 et l'inductance L1 jusqu'à la borne 15. La charge continue connectée aux bornes 11 et 12 est alimentée par l'énergie emmagasinée dans l'élément de stockage d'énergie C1. A chaque ouverture du transistor S2, l'énergie emmagasinée dans l'inductance L1 est transférée à la charge continue. La circulation du courant s'effectue alors depuis l'inductance L1, via les bornes 15 puis 16, la diode D3, jusqu'à la borne positive 11, puis de la borne négative 12, via la diode D2 jusqu'à l'inductance L1.

Le circuit de limitation du courant d'appel 14 sert avant chaque impulsion de fermeture d'un des transistors S1 et S2, en particulier lorsque l'on s'éloigne du zéro de tension de la tension Vac. En effet, la tension aux bornes du transistor S1 ou S2 lors de sa fermeture est d'autant plus important que l'on est proche du milieu de l'alternance correspondante, ce qui, sans circuit de limitation, provoquerait un pic de courant. L'ouverture de l'interrupteur K, de façon impulsionnelle, avant chaque début d'impulsion de fermeture des transistors S1 et S2 afin que la résistance R limite le courant de charge du condensateur C1, évite ces pics de courant, en particulier vers le milieu de chaque alternance.

Le convertisseur de la figure 1 est unidirectionnel, c'est-à-dire qu'il ne peut fonctionner qu'en convertisseur alternatif-continu (mode redresseur ou rectifier). Dans certaines applications, on souhaite disposer d'un convertisseur réversible, c'est-à-dire capable de fonctionner également en convertisseur continu-alternatif. Cela sert par exemple à réinjecter de l'énergie dans le réseau de distribution électrique ou à alimenter un moteur à partir d'une batterie. Le convertisseur doit alors être capable de fonctionner en onduleur (inverter).

Les modes de réalisation décrits prévoient de tirer profit des avantages d'une architecture totem pole et de son rendement pour réaliser un convertisseur réversible.

Un exemple d'application d'un convertisseur réversible est de permettre, avec le même convertisseur, à la fois d'alimenter une charge à partir du réseau de distribution électrique et d'injecter de l'énergie sur le réseau lorsque la charge ne consomme pas.

Un autre exemple d'application d'un convertisseur réversible est de permettre, avec le même convertisseur, à la fois d'alimenter un moteur (transfert d'énergie électrique-mécanique) à partir d'une batterie et de recharger la batterie (transfert d'énergie mécanique-électrique) à partir de la rotation de moteur.

On pourrait penser utiliser des transistors MOS à la place des diodes D3 et D4 afin de rendre la structure bidirectionnelle. Toutefois, le besoin de limiter le courant d'appel rend cette solution très contraignante en termes de commande des transistors MOS et d'encombrement et de fiabilité du circuit de limitation des pertes en régime établi. Le circuit 14 de limitation du courant d'appel est de plus indispensable.

La figure 2 représente, de façon schématique et partielle, en partie sous forme de blocs, un mode de réalisation d'un convertisseur totem pole réversible.

On retrouve une structure totem pole de deux transistors à effet de champ S1 et S2, par exemple des transistors MOS (ici à canal N), connectés en série entre deux bornes 11 et 12 d'une tension continue Vdc. Le drain du transistor S1 est côté borne 11 et la source du transistor S2 est côté borne 12. Un élément de stockage C1 (condensateur ou batterie par exemple) de l'énergie continue relie les bornes 11 et 12, la borne 11 étant, arbitrairement, la borne positive de la tension Vdc.

Le point milieu 13 entre les deux transistors S1 et S2 est relié, par l'intermédiaire d'un élément inductif L1, à la première borne 15 d'une tension alternative Vac. Selon les modes de réalisation décrits, on prévoit de remplacer les diodes D3 et D4 de la figure 1 par quatre thyristors SCR1, SCR2, SCR3, SCR4. Deux thyristors SCR1 et SCR2 sont connectés en série entre les bornes 11 et 12, les anodes des thyristors SCR1 et SCR2 étant dirigées vers la borne 12. Deux thyristors SCR3 et SCR4 sont connectés en série entre les bornes 11 et 12, les anodes des thyristors SCR3 et SCR4 étant dirigées vers la borne 11. Le point milieu 17 des associations en série des thyristors SCR1 et SCR2 et des thyristors SCR3 et SCR4 est commun et est relié à une deuxième borne 16 de la tension alternative Vac. Dans l'exemple de la figure 2, les thyristors sont tous à gâchette de cathode.

Comme on le verra par la suite, grâce à la solution proposée, un circuit de limitation du courant d'appel (14, figure 1) n'est pas nécessaire.

Les bornes 15 et 16 correspondent par exemple à des bornes de raccordement au réseau de distribution électrique ou aux bornes d'un moteur, etc., et un filtre d'entrée 18, ou filtre secteur, est de préférence intercalé entre d'une part la borne 15 et le noeud 13 et, d'autre part, la borne 16 et le point 17. Un élément 19 de mesure du courant alternatif est intercalé entre le filtre 18 et le point 17. L'information représentative du courant, mesuré par l'élément 19, est exploitée par un circuit 20 de commande (CTRL) des périodes de conduction des transistors S1 et S2. Le circuit 20 reçoit d'autres informations comme, par exemple, une information représentative de la tension Vdc, une information représentative, en mode redresseur, des besoins de la charge continue connectée aux bornes 11 et 12, etc. Le circuit 20 fournit des signaux de commande à des circuits (DRIVER) 21 et 22 de génération de signaux de commande des grilles gS1 et gS2 des transistors respectifs S1 et S2. Le circuit 20 fournit également, directement ou indirectement, des signaux de commande aux gâchettes gSCR1, gSCR2, gSCR3 et gSCR4 des thyristors SCR1, SCR2, SCR3 et SCR4. En figure 2, on a également représenté les diodes intrinsèques source-drain D1 et D2 des transistors S1 et S2. En variante, les diodes D1 et D2 peuvent être des composants additionnels. Selon une autre variante, on rend le transistor S1 ou S2 passant pendant les périodes où le courant doit circuler dans la diode D1, respectivement D2. Cela permet de réduire les pertes en conduction par rapport à une circulation de courant dans la diode intrinsèque D1 ou D2. Les transistors S1 et S2 sont commandés en modulation de largeur d'impulsions. La fréquence des impulsions est généralement fixe et est nettement supérieure (ratio d'au moins 100, par exemple de quelques kHz à quelques centaines de kHz) à la fréquence de la tension Vac (généralement moins de 100 Hz, typiquement 50 Hz ou 60 Hz pour le réseau de distribution d'électricité). Le convertisseur n'effectue ni élévation, ni diminution de la tension que ce soit dans un sens ou dans un autre. On ne se préoccupe ici que de la conversion alternative-continue et inversement. Le cas échéant, d'autres systèmes de conversion et de régulation sont présents en amont ou en aval pour réaliser une diminution ou une augmentation des valeurs des tensions Vac et Vdc.

L'utilisation de thyristors dans les deux sens de conduction dans une architecture totem pole semble à première vue inutile en raison de la présence des transistors S1 et S2. Cependant, comme il ressort des modes de réalisation ci-dessous, l'utilisation de quatre thyristors à la place de deux diodes permet non seulement d'éviter le circuit de limitation du courant d'appel, mais également de rendre le convertisseur réversible avec une commande particulièrement simple.

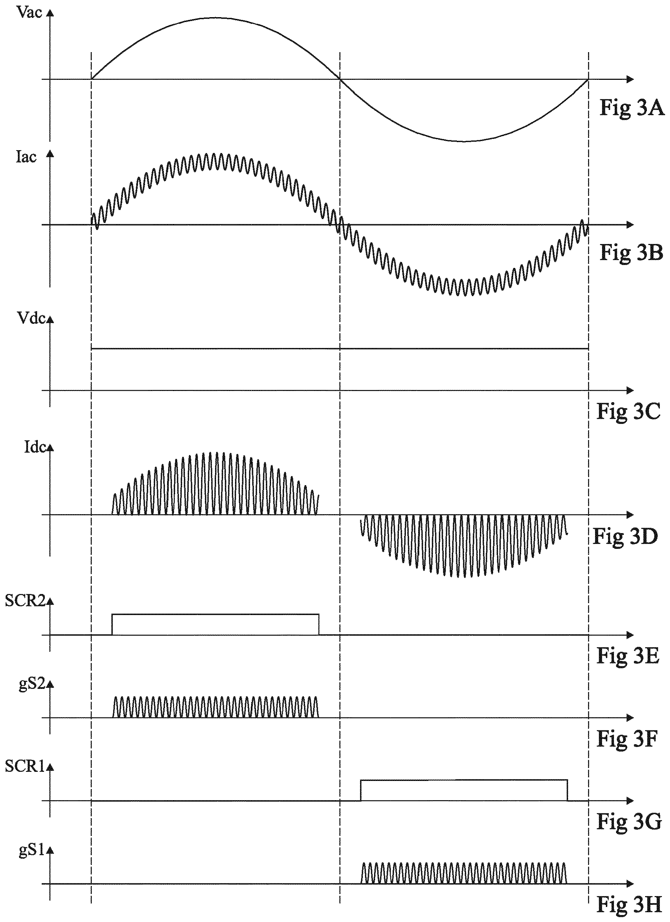

Les figures 3A, 3B, 3C, 3D, 3E, 3F, 3G et 3H illustrent, sous forme de chronogrammes, le fonctionnement du convertisseur de la figure 2 en mode de conversion alternatif-continu au cours d'une période de la tension alternative Vac.

La figure 3A représente un exemple d'allure de la tension Vac entre les bornes 15 et 16 (tension de ligne ou moteur) . La figure 3B représente un exemple correspondant d'allure du courant Iac ou courant de ligne ou moteur. La figure 3C représente un exemple d'allure correspondante de la tension Vdc entre les bornes 11 et 12 (tension de batterie ou du condensateur C1) . La figure 3D représente un exemple correspondant d'allure du courant Idc côté tension continue. La figure 3E représente un exemple de périodes de fermeture du thyristor SCR2. La figure 3F représente un exemple d'allure correspondante de la tension de grille gS2 du transistor S2. La figure 3G représente un exemple de périodes de fermeture du thyristor SCR1. La figure 3H représente un exemple d'allure correspondante de la tension de grille gS1 du transistor S1.

On se place en régime établi, c'est-à-dire que l'on considère que le condensateur C1 est au niveau de charge requis par l'application. Le fonctionnement au démarrage est similaire mais la tension Vdc croit progressivement sur plusieurs alternances jusqu'à atteindre son niveau nominal fixé par l'application. Pour simplifier les explications, on néglige la présence du filtre 18 dans ce qui suit.

En mode de conversion alternatif-continu, les thyristors SCR3 et SCR4 ne sont pas utilisés et restent bloqués.

Le thyristor SCR2 est rendu passant pendant les alternances positives de la tension Vac tandis que le thyristor SCR1 est rendu passant pendant les alternances négatives de la tension alternative. Toutefois, à la différence des diodes D3 et D4 du cas classique de la figure 1, la mise en conduction des thyristors SCR1 et SCR2 ne dépend pas des périodes de conduction des transistors S1 et S2, mais est forcée pendant le maximum de la durée possible des alternances positives et négatives. Cette durée couvre au moins toute la durée du train d'impulsions de commande des transistors S1 et S2, et est fixé par la demi-période de la tension alternative. Ainsi, la fermeture du transistor S1 ou S2 (selon l'alternance de la tension Vac) s'effectue alors que la tension à ses bornes est approximativement nulle. La commande des transistors S1 et S2 n'est pas modifiée par les modes de réalisation décrits. On notera que le thyristor SCR1 ou SCR2 se bloque en fin d'alternance quand le courant qui le traverse s'annule (devient inférieur à son courant de maintien).

Pendant les alternances positives de la tension Vac, le transistor S2 est commandé en modulation de largeur d'impulsions pour être périodiquement fermé (passant) et le transistor S1 reste en permanence ouvert (bloqué). Par ailleurs, la diode source-drain D2 du transistor S2 se trouve polarisée en inverse tandis que la diode source-drain D1 du transistor S1 se trouve polarisée en direct et sert de diode de roue libre. Pendant les impulsions de fermeture du transistor S2, l'inductance L1 accumule de l'énergie. La circulation du courant s'effectue, depuis la borne 15, via l'inductance L1, le transistor S2 et le thyristor SCR2 jusqu'à la borne 16. La charge continue connectée aux bornes 11 et 12 est alimentée par l'énergie emmagasinée dans l'élément de stockage d'énergie C1 (condensateur ou batterie). A chaque ouverture du transistor S2, l'énergie emmagasinée dans l'inductance L1 est transférée à la charge continue. La circulation du courant s'effectue alors depuis l'inductance L1, via la diode D1 du transistor S1 jusqu'à la borne positive 11, puis de la borne négative 12, via le thyristor SCR2 jusqu'à la borne 16 pour reboucler sur l'inductance L1.

Pendant les alternances négatives de la tension Vac, le transistor S1 est commandé en modulation de largeur d'impulsions pour être périodiquement fermé (passant) et le transistor S2 reste en permanence ouvert (bloqué). Par ailleurs, la diode source-drain D1 du transistor S1 se trouve polarisée en inverse tandis que la diode source-drain D2 du transistor S2 se trouve polarisée en direct et sert de diode de roue libre. Pendant les impulsions de fermeture du transistor S1, l'inductance L1 accumule de l'énergie. La circulation du courant s'effectue, depuis la borne 16, via le thyristor SCR1, le transistor S1 et l'inductance L1 jusqu'à la borne 15. La charge continue connectée aux bornes 11 et 12 est alimentée par l'énergie emmagasinée dans l'élément de stockage d'énergie C1. A chaque ouverture du transistor S2, l'énergie emmagasinée dans l'inductance L1 est transférée à la charge continue. La circulation du courant s'effectue alors depuis l'inductance L1, via les bornes 15 puis 16, le thyristor SCR1, jusqu'à la borne positive 11, puis de la borne négative 12, via la diode D2 jusqu'à l'inductance L1.

L'utilisation de quatre thyristors présente un autre avantage qui est de permettre un fonctionnement en onduleur, c'est-à-dire en conversion continu-alternatif.

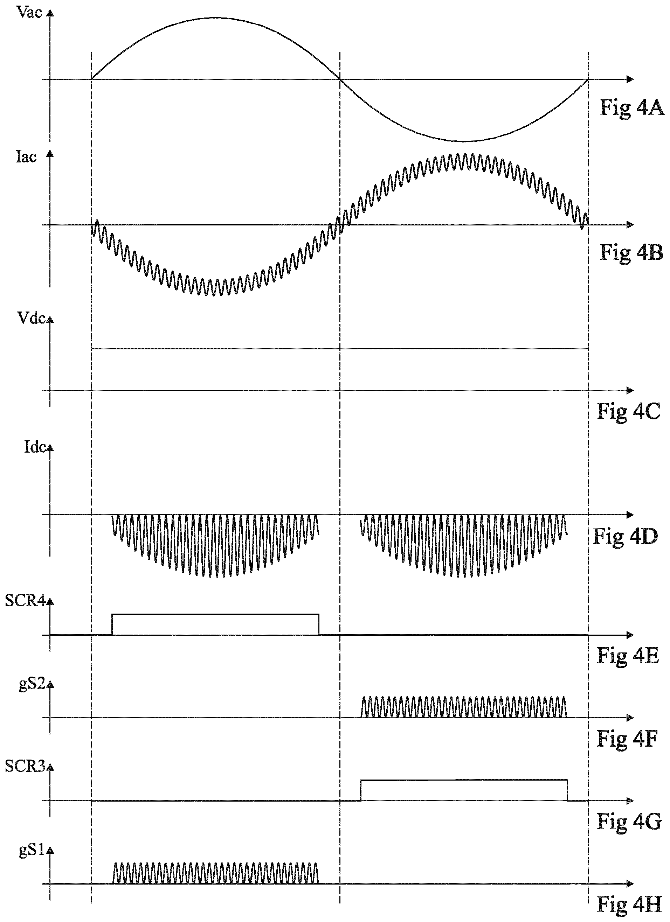

Les figures 4A, 4B, 4C, 4D, 4E, 4F, 4G et 4H illustrent, sous forme de chronogrammes, le fonctionnement du convertisseur de la figure 2 en mode de conversion continu-alternatif au cours d'une période de la tension alternative Vac.

La figure 4A représente un exemple d'allure de la tension Vac entre les bornes 15 et 16 (tension de ligne ou moteur) . La figure 4B représente un exemple correspondant d'allure du courant Iac ou courant de ligne ou moteur. La figure 4C représente un exemple d'allure correspondante de la tension Vdc entre les bornes 11 et 12 (tension de batterie ou du condensateur C1) . La figure 4D représente un exemple correspondant d'allure du courant Idc côté tension continue. La figure 4E représente un exemple de périodes de fermeture du thyristor SCR4. La figure 4F représente un exemple d'allure correspondante de la tension de grille gS2 du transistor S2. La figure 4G représente un exemple de périodes de fermeture du thyristor SCR3. La figure 4H représente un exemple d'allure correspondante de la tension de grille gS1 du transistor S1.

En mode onduleur, la question du régime établi de la tension Vdc ne se pose pas. En effet, il s'agit ici de transférer de l'énergie de la source continue (batterie chargée par exemple) à la charge alternative.

Pour fonctionner en onduleur, c'est-à-dire par exemple réinjecter de l'énergie sur le réseau de distribution électrique ou alimenter un moteur, le sens de circulation du courant dans le convertisseur doit être inversé par rapport au cas du convertisseur alternatif-continu. Ainsi, avec les mêmes conventions de signe, le courant Idc est tout le temps négatif. Par ailleurs, Le signe du courant Iac est inversé par rapport au signe de la tension Vac, c'est-à-dire qu'il est négatif pendant les alternances positives et positif pendant les alternances négatives.

Comme pour le mode redresseur, le thyristor SCR4 est rendu passant, de façon continue, pendant les alternances positives de la tension alternative Vac tandis que le thyristor SCR3 est rendu passant, de façon continue, pendant les alternances négatives de la tension alternative Vac. Toutefois, côté transistors S1 et S2, à la différence du mode redresseur, le transistor S1 est commandé pendant les alternances positives et le transistor S2 est commandé pendant les alternances négatives de la tension Vac. Les transistors S1 et S2 sont toujours commandés, de façon impulsionnelle, de préférence en modulation de largeur d'impulsions si la charge alternative est susceptible de varier (par exemple dans le cas d'un moteur).

En mode de conversion continu-alternatif, les thyristors SCR1 et SCR2 ne sont pas utilisés et restent bloqués.

Pendant les alternances positives de la tension Vac, le transistor S1 est commandé en modulation de largeur d'impulsions pour être périodiquement fermé (passant) et le transistor S2 reste en permanence ouvert (bloqué). Par ailleurs, la diode source-drain D1 du transistor S1 se trouve polarisée en inverse tandis que la diode source-drain D2 du transistor S2 se trouve polarisée en direct et sert de diode de roue libre. Pendant les impulsions de fermeture du transistor S1, l'inductance L1 accumule de l'énergie. La circulation du courant s'effectue, depuis la borne 11, via le transistor S1 et l'inductance L1 jusqu'à la borne 15, puis de la borne 16, via le thyristor SCR4 jusqu'à la borne 12. A chaque ouverture du transistor S1, l'énergie emmagasinée dans l'inductance L1 est transférée au réseau alternatif (ou au moteur). La circulation du courant s'effectue alors depuis l'inductance L1 vers la borne 15, puis de la borne 16, via le thyristor SCR4 et la diode D2 jusqu'à l'inductance L1.

Pendant les alternances négatives de la tension Vac, le transistor S2 est commandé en modulation de largeur d'impulsions pour être périodiquement fermé (passant) et le transistor S1 reste en permanence ouvert (bloqué). Par ailleurs, la diode source-drain D2 du transistor S2 se trouve polarisée en inverse tandis que la diode source-drain D1 du transistor S1 se trouve polarisée en direct et sert de diode de roue libre. Pendant les impulsions de fermeture du transistor S2, l'inductance L1 accumule de l'énergie. La circulation du courant s'effectue, depuis la borne 11, via le thyristor SCR3 jusqu'à la borne 16, puis depuis la borne 15, via l'inductance L1 et le transistor S2 jusqu'à la borne 12. A chaque ouverture du transistor S2, l'énergie emmagasinée dans l'inductance L1 est transférée au réseau alternatif. La circulation du courant s'effectue alors depuis l'inductance L1, via la diode D1, le thyristor SCR3 jusqu'à la borne 16, se reboucle par la borne 15 dans l'inductance L1.

Par rapport au mode redresseur, on veille à chaque fin d'alternance, à arrêter les impulsions de commande des transistors S1 et S2 suffisamment tôt pour garantir que le courant Iac soit nul à la fin de l'alternance.

Les applications plus particulièrement visées sont des applications dans lesquelles les tensions Vac et Vdc ont des amplitudes supérieures à 100 volts. Or, les signaux de commande des transistors S1 et S2 et des thyristors SCR1 à SCR4 présentent des amplitudes allant de quelques volts à 10-20 volts. Par conséquent, on doit prévoir des circuits de génération de ces signaux de commande ayant des références de tension appropriées.

Les figures suivantes font ressortir les connexions et potentiels d'alimentation requis pour les signaux de commande des transistors et triacs dans différents modes de réalisation.

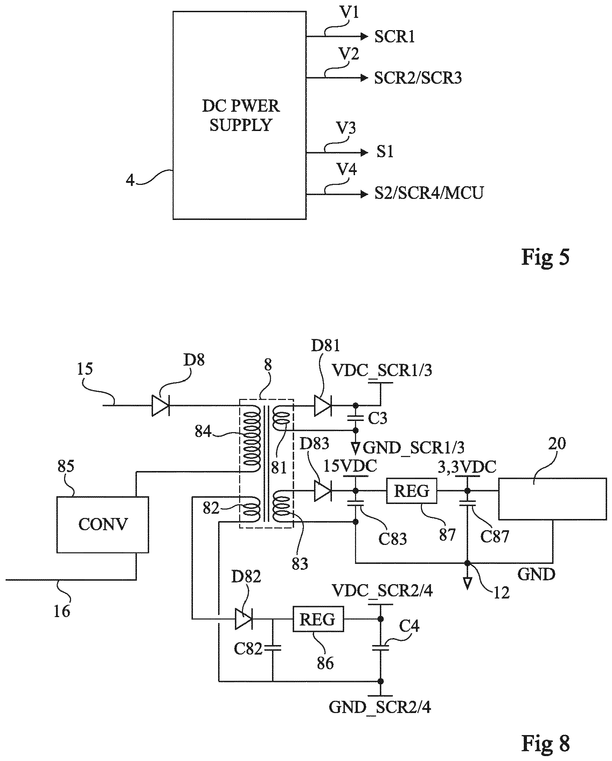

La figure 5 représente, de façon schématique et simplifiée, un mode de réalisation d'un circuit 4 (DC POWER SUPPLY) de génération de tensions continues de circuits de commande d'un convertisseur totem pole réversible, adapté au mode de réalisation de la figure 2.

Dans la réalisation de la figure 2, le circuit 4 doit générer quatre tensions continues V1, V2, V3 et V4 d'amplitude différentes, respectivement destinées au thyristor SCR1, aux thyristors SCR2 et SCR3, au circuit de commande 21 du transistor S1, et commune au circuit de commande du transistor S2, au thyristor SCR4 et au circuit 20 (par exemple, un microcontrôleur) .

Côté transistor S2, sa source étant la masse GND (potentiel de la borne 12), le potentiel de référence de son signal de commande de grille gS2 peut être également la masse GND. Le circuit 22 est alimenté par une tension positive V4, par exemple de l'ordre de 15 volts, qui peut servir à générer une tension de quelques volts d'alimentation du circuit 20. De même, l'injection d'un courant de gâchette dans le thyristor S4 dont la cathode est à la masse GND peut être effectuée à partir de cette tension de quelques volts référencée à la masse GND.

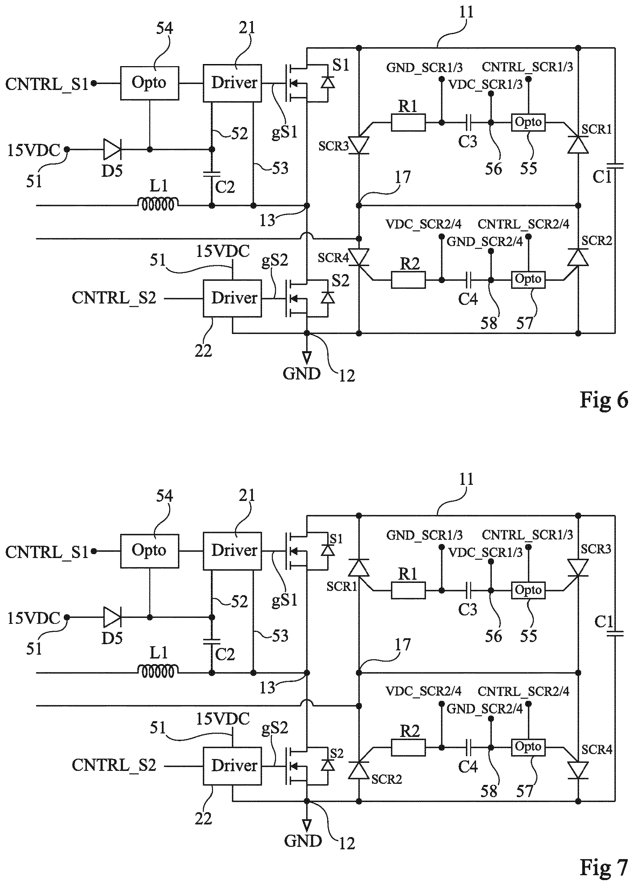

Côté transistor S1, la tension de la borne 11 est trop élevée pour autoriser une commande gS1 référencée à la masse GND. De préférence, on prévoit de référencer une tension d'alimentation continue, par exemple d'une valeur donnée choisie entre quelques volts et une quinzaine de volts, du circuit 21 au noeud 13. Comme le noeud 13 correspond à la source du transistor S1, on garantit ainsi une tension grille-source positive quelle que soit le potentiel du noeud 13 (qui évolue avec la tension Vac). A cette fin, on génère une tension V3, par exemple de 15 volts (référencé à la masse GND). L'application de cette tension pour alimenter le circuit 21 requiert un changement de référence de tension. Un mode de réalisation sera décrit en relation avec la figure 6.

Côté thyristor SCR1, on doit générer une tension V1 qui ne peut pas non plus être référencée à la masse GND. De préférence, cette tension est générée avec une référence au potentiel de la borne 11. Un exemple de circuit d'application de la tension V1 à la gâchette du thyristor SCR1 pour injecter un courant de gâchette sera déduit par la suite de l'exposé de la figure 6. Un exemple de circuit de génération de cette tension V1 peut être déduit de l'exposé de la figure 8.

Côté thyristors SCR2 et SCR3, on doit également injecter un courant de gâchette avec une référence de tension différente de la masse GND. La tension V2 est, de préférence, également référencée au potentiel du point 17. Là encore, un exemple de circuit de génération de cette tension V2 et de son application aux gâchettes des thyristors SCR2 et SCR3 sera déduit par la suite de l'exposé de la figure 6.

La figure 6 représente, de façon schématique et partiellement sous forme de blocs, un autre mode de réalisation d'un convertisseur totem pole réversible.

Par rapport au schéma de la figure 2, les thyristors SCR2 et SCR3 sont des thyristors à gâchette d'anode. Le reste du montage n'est pas modifié. La conséquence est qu'il convient de modifier les références de tension des gâchettes des thyristors SCR2 et SCR3 afin d'extraire un courant de gâchette pour les amorcer. La figure 6 illustre également un montage de génération de la tension V3 (d'alimentation du circuit 21) à partir de la tension V4 (15VDC) et illustre l'alimentation du circuit 22 par la tension V4 (15VDC).

Ainsi, comme indiqué, la source du transistor S2 étant la masse GND (potentiel de la borne 12), le potentiel de référence de son signal de commande de grille gS2 peut être également la masse GND. Le circuit 22 est donc, par exemple, alimenté par une tension positive 15VDC (borne 51), de 15 volts, référencée à la masse GND et reçoit un signal numérique basse tension CTRLS2 (de quelques volts, par exemple 3-5 volts) du circuit 20 (par exemple, un microcontrôleur).

Côté transistor S1, la tension de la borne 11 est trop élevée pour autoriser une commande gS1 référencée à la masse GND. Dans l'exemple de la figure 6, on prévoit de référencer la tension d'alimentation, par exemple 15 volts, du circuit 21 au noeud 13. Comme le noeud 13 correspond à la source du transistor S1, on garantit ainsi une tension grille-source positive quel que soit le potentiel du noeud 13 (qui évolue avec la tension Vac). Un potentiel 15VDC de 15 volts (référencé à la masse GND) est appliqué (borne 51) sur l'anode d'une diode D5 dont la cathode est reliée à une borne 52 d'application du potentiel d'alimentation positif du circuit 21. Une borne 53 d'application du potentiel de référence du circuit 21 est connectée au noeud 13. Un condensateur C2 relie la cathode de la diode D5 au noeud 13 pour adapter la référence de la tension de 15 volts alimentant le circuit 21. En raison du changement de référence de tension, un signal de commande basse tension CTRLS1, fourni par le circuit 20, est appliqué par l'intermédiaire d'un optocoupleur 54 (Opto) dont les bornes de conduction (l'émetteur et le collecteur du phototransistor bipolaire de sortie) sont respectivement reliées à la borne 52 et à une borne d'entrée de commande du circuit 21. Le signal CTRLS1 est appliqué sur la borne de commande de l'optocoupleur (l'anode de sa photodiode) en étant référencé à la masse GND.

Côté thyristors SCR1 et SCR3, les bornes de conduction (émetteur et collecteur du phototransistor) du transistor d'un optocoupleur 55 (Opto) sont connectées à une électrode d'un condensateur C3 définissant une borne 56 d'application d'un potentiel positif VDC_SCR1/3 d'une alimentation continue (par exemple, de l'ordre de 15 volts) isolée (flottante) référencée à une masse flottante GND_SCR1/3, et à la gâchette du thyristor SCR1 pour y injecter un courant de gâchette. La borne de masse flottante GND_SCR1/3 de cette alimentation isolée est par ailleurs reliée, par une résistance R1, à la gâchette (d'anode) du thyristor SCR3, pour extraire un courant de gâchette. Un signal de commande basse tension CNTRL_SCR1/3, fourni par le circuit 20, est appliqué sur la borne de commande de l'optocoupleur 55 (l'anode de sa photodiode) en étant référencé à la masse GND. Lorsque le signal CNTRL_SCR1/3 est actif, le transistor de l'optocoupleur 55 est passant et un courant circule depuis la borne 56, dans la gâchette du thyristor SCR1 (qui s'amorce), vers la borne 11, vers l'anode du thyristor SCR3 et est extrait de sa gâchette (le thyristor SCR3 s'amorce donc) pour revenir vers la masse flottante GND_SCR1/3.

Côté thyristors SCR2 et SCR4, les bornes de conduction (émetteur et collecteur du phototransistor) du transistor d'un optocoupleur 57 (Opto) sont connectées à la gâchette d'anode du thyristor SCR2 pour y prélever un courant de gâchette et à une électrode d'un condensateur C4 définissant une borne 58 d'application d'une masse flottante GND_SCR2/4 d'une alimentation continue (par exemple, de l'ordre de 15 volts) isolée référencée à cette masse flottante. Un potentiel positif VDC_SCR2/4 de cette alimentation isolée est appliqué, par une résistance R2, à la gâchette (de cathode) du thyristor SCR4 pour y injecter un courant de gâchette. Un signal de commande basse tension CNTRL_SCR2/4, fourni par le circuit 20, est appliqué sur la borne de commande de l'optocoupleur 55 (l'anode de sa photodiode) en étant référencé à la masse GND. Lorsque le signal CNTRL_SCR2/4 est actif, le transistor de l'optocoupleur 55 est passant et un courant circule depuis le potentiel VDC_SCR2/4, dans la gâchette du thyristor SCR4 (qui s'amorce), vers la borne 12, vers l'anode du thyristor SCR2 et est extrait de sa gâchette (le thyristor SCR2 s'amorce donc) pour revenir vers la borne 58.

La figure 7 représente, de façon schématique et partiellement sous forme de blocs, un autre mode de réalisation d'un convertisseur totem pole réversible.

Par rapport au schéma de la figure 2, les thyristors SCR1 et SCR4 sont à gâchette d'anode et les thyristors SCR2 et SCR3 sont à gâchette de cathode. La conséquence est du côté des références de tension d'application des signaux de commande des thyristors, le reste du circuit n'étant pas modifié. Par rapport à la figure 6, les montages de commande (optocoupleur 55, condensateur C3, résistance R1, application des potentiels relatifs VDC_SCR1/3 et GND_SCR1/3 ; optocoupleur 57, condensateur C4, résistance R2, application des potentiels relatifs VDC_SCR2/4 et GND_SCR2/4) sont identiques. La différence est que, côté thyristors SCR1 et SCR3, c'est la gâchette du thyristor SCR1 (au lieu de celle du thyristor SCR3) qui est reliée à la résistance R1 et c'est la gâchette du thyristor SCR3 (au lieu de celle du thyristor SCR1) qui est reliée à l'optocoupleur 55. Côté thyristors SCR2 et SCR4, c'est la gâchette du thyristor SCR2 (au lieu de celle du thyristor SCR4) qui est reliée à la résistance R2 et c'est la gâchette du thyristor SCR4 (au lieu que ce soit respectivement par les bornes 11 et 12).

La figure 8 représente, de façon schématique et partiellement sous forme de blocs, un mode de réalisation d'un circuit de génération de tensions continues de circuits de commande des convertisseurs des figures 6 et 7.

Cette figure illustre un exemple de montage de génération des potentiels VDC_SCR1/3, GND_SCR1/3, VDC_SCR2/4, GND_SCR2/4, 15VDC et 3,3VDC (d'alimentation du microcontrôleur 20) à partir de la tension alternative Vac.

On utilise un transformateur 8 à trois enroulements secondaires 81, 82 et 83. Un enroulement primaire 84 du transformateur 8 est relié entre la borne 15 par une diode de redressement D8 (par exemple seules les alternances positives sont utilisées pour la génération des alimentations) et une borne d'un convertisseur à découpage 85 (CONV), par exemple un circuit intégré connu sous la dénomination commerciale VIPER, dont l'autre borne est reliée à la borne 16 (figures 5 à 7).

Le premier enroulement secondaire 81 du transformateur 8 fournit la tension flottante VDC_SCR1/3-GND_ SCR1/3. Pour cela, une première borne de l'enroulement 81 définit le potentiel GND_SCR1/3 et est reliée à la résistance R1. Une deuxième borne de l'enroulement 81 est reliée en entrée (anode) d'un élément de redressement D81 (par exemple, une diode). La sortie (cathode) de l'élément de redressement D8 définit le potentiel VDC_SCR1/3 et est reliée à la borne 56.

Le deuxième enroulement secondaire 82 du transformateur 8 fournit la tension flottante VDC_SCR2/4-GND_SCR2/4. Pour cela, une première borne de l'enroulement 82 définit le potentiel GND_SCR2/4 et est reliée, dans le mode de réalisation des figures 6 et 7, à la borne 58. Une deuxième borne de l'enroulement 82 est reliée en entrée (anode) d'un élément de redressement D82 (par exemple, une diode). La sortie (cathode) de l'élément de redressement D82 définit le potentiel VDC_SCR2/4 et est reliée, par l'intermédiaire d'un régulateur linaire 86 (REG), dans le mode de réalisation des figures 6 et 7, à la résistance R2. Un condensateur C82 relie la cathode de la diode D83 à la masse flottante GND_SCR2/4.

Le troisième enroulement secondaire 83 du transformateur 8 fournit la tension 15VDC-GND. Pour cela, une première borne de l'enroulement 83 définit le potentiel GND et est reliée à la borne 12. Une deuxième borne de l'enroulement 83 est reliée en entrée (anode) d'un élément de redressement D83 (par exemple, une diode). La sortie (cathode) de l'élément de redressement D83 définit le potentiel 15VDC et est reliée à la borne 51. Un condensateur C83 relie la cathode de la diode D83 à la masse GND.

Les amplitudes des tensions VDC_SCR1/3-GND_SCR1/3, VDC_SCR2/4-GND_SCR2/4 et 15VDC-GND dépendent des rapports de transformation des enroulements 81, 82 et 83 par rapport à l'enroulement 84.

Dans l'exemple représenté, la tension 15VDC sert à générer la basse tension 3,3VDC (par exemple, de 3,3 volts) référencée à la masse GND pour le circuit ou microcontrôleur 20. Pour cela, on utilise, par exemple, un régulateur linéaire 87 (REG). Un condensateur C87 relie la sortie du convertisseur à la borne 12 (la masse GND).

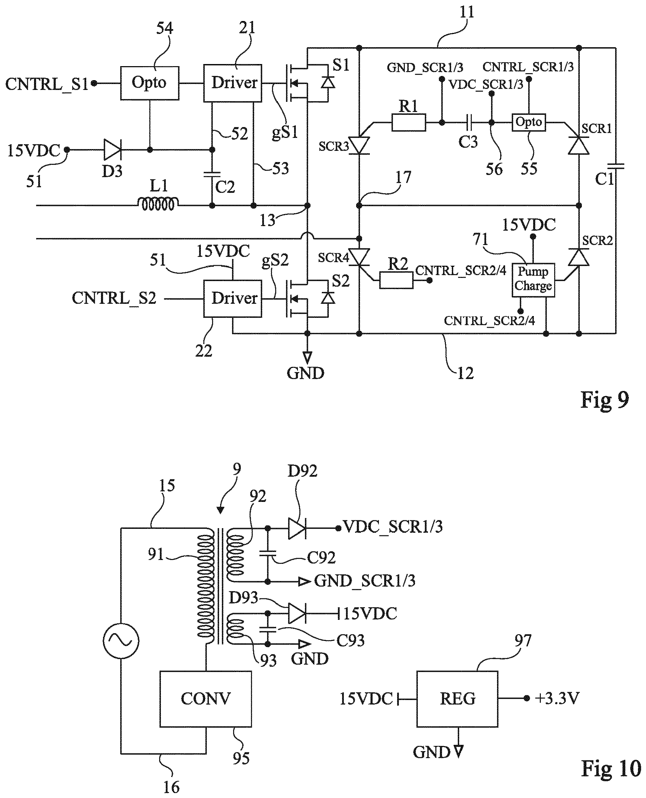

La figure 9 représente, de façon schématique et partiellement sous forme de blocs, une variante de la réalisation de la figure 6 dans laquelle le signal de commande CNTRL_SCR2/4, référence à la masse GND, est appliqué à la gâchette de cathode du thyristor SCR4 par l'intermédiaire de la résistance R4 et à la gâchette d'anode du thyristor SCR2 par l'intermédiaire d'un circuit 71 de pompe de charge (Pump Charge) alimenté par la tension 15VDC. Le reste du montage n'est pas modifié par rapport à la figure 6.

La figure 10 représente, de façon schématique et partiellement sous forme de blocs, un mode de réalisation d'un circuit de génération de tensions continues d'alimentation de circuits de commande du convertisseur de la figure 9.

Cette figure illustre un exemple de montage de génération des potentiels VDC_SCR1/3, GND_SCR1/3 et 15VDC à partir de la tension alternative Vac.

On utilise un transformateur 9 à deux enroulements secondaires 92 et 93. Un enroulement primaire 91 du transformateur est relié entre la borne 15 et une borne d'un convertisseur à découpage 95 (CONV), par exemple un circuit intégré connu sous la dénomination commerciale VIPER, dont l'autre borne est reliée à la borne 16.

Un premier enroulement secondaire 92 du transformateur 9 fournit la tension VDC_SCR1/3-GND_SCR1/3. Pour cela, une première borne de l'enroulement 92 définit le potentiel GND_SCR1/3 et est reliée à la résistance R1 (figure 9) . Une deuxième borne de l'enroulement 92 est reliée en entrée (anode) d'un élément de redressement D92 (par exemple, une diode) et un condensateur C92 relie les deux bornes de l'enroulement 92. La sortie (cathode) de l'élément de redressement D92 définit le potentiel VDC_SCR1/3 et est reliée à la borne 56 (figure 9).

Un deuxième enroulement secondaire 93 du transformateur 9 fournit la tension 15VDC-GND. Pour cela, une première borne de l'enroulement 93 définit le potentiel GND et est reliée à la borne 12. Une deuxième borne de l'enroulement 93 est reliée en entrée (anode) d'un élément de redressement D93 (par exemple, une diode). Un condensateur C93 relie les deux bornes de l'enroulement 93. La sortie (cathode) de l'élément de redressement D93 définit le potentiel 15VDC et est reliée à la borne 51.

Les amplitudes des tensions VDC_SCR1/3-GND SCR1/3 et 15VDC-GND dépendent des rapports de transformation des enroulements 92 et 93 par rapport à l'enroulement 94.

Ici également, la tension 15VDC-GND peut servir à générer la basse tension (par exemple, de 3,3 volts) référencée à la masse GND pour le circuit ou microcontrôleur 20. Pour cela, on utilise, par exemple, un régulateur linéaire 97 (REG).

Un avantage des modes de réalisation décrits est que le convertisseur totem pole ainsi réalisé est particulièrement performant. En particulier, on s'affranchit du besoin d'un circuit de limitation du courant d'appel, tout en obtenant un convertisseur réversible.

Des modes de réalisation particuliers ont été décrits. Diverses variantes et modifications apparaîtront à l'homme de l'art. En particulier, le choix du montage parmi ceux des figures 2, 6, 7 ou 9 dépend de l'application et du circuit utilisé pour générer les tensions de commande. En effet, les circuits des figures 8 et 10 ne sont que des exemples et on pourra en variante utiliser des tensions présentes dans le reste de l'application. En outre, la mise en oeuvre pratique des modes de réalisation et le dimensionnement des composants est à la portée de l'homme du métier à partir de la description fonctionnelle donnée ci-dessus.

## Revendications

1. Convertisseur alternatif-continu réversible, comportant :
un premier transistor à effet de champ (S1) et un deuxième transistor à effet de champ (S2) en série entre une première borne (11) et une deuxième borne (12) destinées à une tension continue (Vdc) ;
un élément inductif (L1) reliant un premier point milieu (13) de l'association en série des deux transistors à une première borne (15) destinée à une tension alternative (Vac) ;
un premier thyristor (SCR1) et un deuxième thyristor (SCR2) en série entre les bornes de tension continue, un deuxième point milieu (17) de l'association en série du premier thyristor et du deuxième thyristor étant relié à une deuxième borne (16) destinée à la tension alternative, une anode du premier thyristor et une cathode du deuxième thyristor étant reliées audit deuxième point milieu, les anodes du premier thyristor (SCR1) et du deuxième thyristor (SCR2) étant dirigées vers la deuxième borne (12); et
un troisième thyristor (SCR3) et un quatrième thyristor (SCR4) en série entre les bornes de tension continue, une cathode du troisième thyristor et une anode du premier thyristor étant reliées audit deuxième point milieu, les anodes du troisième thyristor (SCR3) et du quatrième thyristor (SCR4) étant dirigées vers la première borne (11).

2. Convertisseur selon la revendication 1, dans lequel :
une première diode (D1) est en parallèle avec le premier transistor (S1), anode côté premier point milieu (13) ; et
une deuxième diode (D2) est en parallèle avec le deuxième transistor (S2), cathode côté premier point milieu (13).

3. Convertisseur selon la revendication 2, dans lequel chaque diode (D1, D2) est définie par la diode intrinsèque drain-source du transistor (S1, S2) concerné.

4. Convertisseur selon l'une quelconque des revendications 1 à 3, dans lequel les thyristors (SCR1, SCR2, SCR3, SCR4) sont à gâchette de cathode.

5. Convertisseur selon l'une quelconque des revendications 1 à 3, dans lequel :
le premier thyristor (SCR1) et le quatrième thyristor (SCR4) sont à gâchette de cathode ; et
le deuxième thyristor (SCR2) et le troisième thyristor (SCR3) sont à gâchette d'anode.

6. Convertisseur selon l'une quelconque des revendications 1 à 3, dans lequel :
le premier thyristor (SCR1) et le quatrième thyristor (SCR4) sont à gâchette d'anode ; et
le deuxième thyristor (SCR2) et le troisième thyristor (SCR3) sont à gâchette de cathode.

7. Procédé de commande d'un convertisseur selon l'une quelconque des revendications 1 à 6, dans lequel, dans un mode de conversion alternatif-continu :
le deuxième thyristor (SCR2) est rendu passant de façon continue pendant des alternances d'un premier signe de la tension alternative (Vac) ;
le premier thyristor (SCR1) est rendu passant de façon continue pendant des alternances d'un deuxième signe de la tension alternative ;
le deuxième transistor (S2) est commandé de façon impulsionnelle pendant les alternances du premier signe ; et
le premier transistor (S1) est commandé de façon impulsionnelle pendant les alternances du deuxième signe.

8. Procédé selon la revendication 7, dans son rattachement à la revendication 2 ou 3, dans lequel la première diode (D1) sert de diode de roue-libre.

9. Procédé de commande d'un convertisseur selon l'une quelconque des revendications 1 à 6, dans lequel, dans un mode de conversion continu-alternatif :
le quatrième thyristor (SCR4) est rendu passant de façon continue pendant des alternances d'un premier signe de la tension alternative (Vac) ;
le troisième thyristor (SCR3) est rendu passant de façon continue pendant des alternances d'un deuxième signe de la tension alternative ;
le premier transistor (S1) est commandé de façon impulsionnelle pendant les alternances du premier signe ; et
le deuxième transistor (S2) est commandé de façon impulsionnelle pendant les alternances du deuxième signe.

10. Procédé selon la revendication 9, dans son rattachement à la revendication 2 ou 3, dans lequel la deuxième diode (D2) sert de diode de roue-libre.

## Patentansprüche

1. Reversibler Wechselspannungs-Gleichspannungs-Wandler, der Folgendes aufweist:
einen ersten Feldeffekttransistor (S1) und einen zweiten Feldeffekttransistor (S2) in Reihe zwischen einem ersten Anschluss (11) und einem zweiten Anschluss (12), die für eine Gleichspannung (Vdc) bestimmt sind;
ein induktives Element (L1), das einen ersten Mittelpunkt (13) der Reihenschaltung der beiden Transistoren mit einem ersten Anschluss (15) verbindet, der für eine Wechselspannung (Vac) bestimmt ist;
einen ersten Thyristor (SCR1) und einen zweiten Thyristor (SCR2) in Reihe zwischen den Gleichspannungsanschlüssen, wobei ein zweiter Mittelpunkt (17) der Reihenschaltung des ersten Thyristors und des zweiten Thyristors mit einem zweiten Anschluss (16) verbunden ist, der für die Wechselspannung bestimmt ist, wobei eine Anode des ersten Thyristors und eine Kathode des zweiten Thyristors mit dem zweiten Mittelpunkt verbunden sind, wobei die Anoden des ersten Thyristors (SCR1) und des zweiten Thyristors (SCR2) auf den zweiten Anschluss (12) ausgerichtet sind; und
einen dritten Thyristor (SCR3) und einen vierten Thyristor (SCR4) in Reihe zwischen den Gleichspannungsanschlüssen, wobei eine Kathode des dritten Thyristors und eine Anode des ersten Thyristors mit dem zweiten Mittelpunkt verbunden sind, wobei die Anoden des dritten Thyristors (SCR3) und des vierten Thyristors (SCR4) auf den ersten Anschluss (11) ausgerichtet sind.

2. Wandler nach Anspruch 1, wobei
eine erste Diode (D1) parallel zum ersten Transistor (S1) liegt, und zwar mit der Anode auf der Seite des ersten Mittelpunkts (13); und
eine zweite Diode (D2) parallel zum zweiten Transistor (S2) liegt, und zwar mit der Kathode auf der Seite des ersten Mittelpunkts (13).

3. Wandler nach Anspruch 2, wobei jede Diode (D1, D2) durch die intrinsische Drain-Source-Diode des betreffenden Transistors (S1, S2) definiert ist.

4. Wandler nach einem der Ansprüche 1 bis 3, wobei die Thyristoren (SCR1, SCR2, SCR3, SCR4) von der Kathode angesteuert sind.

5. Wandler nach einem der Ansprüche 1 bis 3, wobei:
der erste Thyristor (SCR1) und der vierte Thyristor (SCR4) von der Kathode angesteuert sind; und
der zweite Thyristor (SCR2) und der dritte Thyristor (SCR3) von der Anode angesteuert sind.

6. Wandler nach einem der Ansprüche 1 bis 3, wobei:
der erste Thyristor (SCR1) und der vierte Thyristor (SCR4) von der Anode angesteuert sind; und
der zweite Thyristor (SCR2) und der dritte Thyristor (SCR3) von der Kathode angesteuert sind.

7. Verfahren zur Steuerung eines Wandlers nach einem der Ansprüche 1 bis 6, wobei in einem Wechselspannungs-Gleichspannungs-Wandler-Modus
der zweite Thyristor (SCR2) während des Wechsels eines ersten Vorzeichens der Wechselspannung (Vac) dauernd leitend geschaltet wird;
der erste Thyristor (SCR1) während des Wechsels eines zweiten Vorzeichens der Wechselspannung dauernd leitend geschaltet wird;
der zweite Transistor (S2) während des Wechsels des ersten Vorzeichens impulsgesteuert wird; und
der erste Transistor (S1) während des Wechsels des zweiten Vorzeichens impulsgesteuert wird.

8. Verfahren nach Anspruch 7 in Abhängigkeit von Anspruch 2 oder 3, wobei die erste Diode (D1) als Freilaufdiode dient.

9. Verfahren zur Steuerung eines Wandlers nach einem der Ansprüche 1 bis 6, wobei in einem Wechselspannungs-Gleichspannungs-Wandler-Modus
der vierte Thyristor (SCR4) während des Wechsels eines ersten Vorzeichens der Wechselspannung (Vac) dauernd leitend geschaltet wird;
der dritte Thyristor (SCR3) während des Wechsels eines zweiten Vorzeichens der Wechselspannung dauernd leitend geschaltet wird;
der erste Transistor (S1) während des Wechsels des ersten Vorzeichens impulsgesteuert wird; und
der zweite Transistor (S2) während des Wechsels des zweiten Vorzeichens impulsgesteuert wird.

10. Verfahren nach Anspruch 9 in Abhängigkeit von Anspruch 2 oder 3, wobei die zweite Diode (D2) als Freilaufdiode dient.

## Claims

1. Reversible AC-DC converter comprising:
a first field effect transistor (S1) and a second field effect transistor (S2) in series between a first terminal (11) and a second terminal (12) intended for a DC voltage (Vdc);
an inductive element (L1) linking a first midpoint (13) of the association in series of the two transistors to a first terminal (15) intended for an AC voltage (Vac);
a first thyristor (SCR1) and a second thyristor (SCR2) in series between the DC voltage terminals, a second midpoint (17) of the association in series of the first thyristor and the second thyristor being linked to a second terminal (16) intended for the AC voltage, an anode of the first thyristor and a cathode of the second thyristor being linked to said second midpoint, the anode of the first thyristor (SCR1) and the second thyristor (SCR2) being oriented toward the second terminal (12); and
a third thyristor (SCR3) and a fourth thyristor (SCR4) in series between the DC voltage terminals, a cathode of the third thyristor and an anode of the first thyristor being linked to said second midpoint, the anodes of the third thyristor (SCR3) and of the fourth thyristor (SCR4) being oriented toward the first terminal (11).

2. Converter according to Claim 1, in which:
a first diode (D1) is in parallel with the first transistor (S1), with the anode on the side of the first midpoint (13); and
a second diode (D2) is in parallel with the second transistor (S2), with the cathode on the side of the first midpoint (13) .

3. Converter according to Claim 2, in which each diode (D1, D2) is defined by the drain-source intrinsic diode of the transistor (S1, S2) concerned.

4. Converter according to any one of Claims 1 to 3, in which the thyristors (SCR1, SCR2, SCR3, SCR4) are cathode triggered.

5. Converter according to any one of Claims 1 to 3, in which:
the first thyristor (SCR1) and the fourth thyristor (SCR4) are cathode triggered; and
the second thyristor (SCR2) and the third thyristor (SCR3) are anode triggered.

6. Converter according to any one of Claims 1 to 3, in which:
the first thyristor (SCR1) and the fourth thyristor (SCR4) are anode triggered; and
the second thyristor (SCR2) and the third thyristor (SCR3) are cathode triggered.

7. Method of controlling a converter according to any one of Claims 1 to 6, in which, in an AC-DC conversion mode:
the second thyristor (SCR2) is switched on continuously during alternations of a first sign of the AC voltage (Vac);
the first thyristor (SCR1) is switched on continuously during alternations of a second sign of the AC voltage;
the second transistor (S2) is pulse controlled during the alternations of the first sign; and
the first transistor (S1) is pulse controlled during the alternations of the second sign.

8. Method according to Claim 7, in its dependency on Claim 2 or 3, in which the first diode (D1) serves as a freewheeling diode.

9. Method of controlling a converter according to any one of Claims 1 to 6, in which, in a DC-AC conversion mode:
the fourth thyristor (SCR4) is switched on continuously during alternations of a first sign of the AC voltage (Vac);
the third thyristor (SCR3) is switched on continuously during alternations of a second sign of the AC voltage;
the first transistor (S1) is pulse controlled during the alternations of the first sign; and
the second transistor (S2) is pulse controlled during the alternations of the second sign.

10. Method according to Claim 9, in its dependency on Claim 2 or 3, in which the second diode (D2) serves as a freewheeling diode.
